# EUROPEAN PATENT APPLICATION

(11) **EP 4 727 150 A1**
(43) Date of publication of application: **15.04.2026**
(21) Application number: 24830709.2
(22) Date of filing: 24.06.2024
(51) Int. Cl.: H04N 23/68

(54) **OPTICAL IMAGE STABILIZATION DEVICE AND OPTICAL IMAGE STABILIZATION METHOD**

(30) Priority: 26.06.2023 CN 202310762980
(71) Applicant: Huawei Technologies Co., Ltd., Shenzhen, Guangdong 518129 (CN)
(72) Inventor: WANG, Jinghe, Shenzhen, Guangdong 518129 (CN); LV, Quanming, Shenzhen, Guangdong 518129 (CN); MU, Wenjuan, Shenzhen, Guangdong 518129 (CN); TAN, Huang, Shenzhen, Guangdong 518129 (CN)
(74) Representative: Epping - Hermann - Fischer
(86) International application number: PCT/CN2024/101073
(87) International publication number: WO 2025/002067

(57) **Abstract**

Embodiments of this application disclose an optical image stabilization apparatus and an optical image stabilization method. The optical image stabilization apparatus may include a motor driver and an image sensor physically connected to the motor driver. The image sensor is configured to report an operating status of the image sensor to the motor driver. The operating status includes one or more of an exposure state, a readout state, and an interframe idle state. The motor driver is configured to: monitor the operating status of the image sensor, and adjust a driving state of the motor driver to a target driving state based on the operating status. The driving state includes a driving manner and a driving frequency. This application can improve imaging quality and reduce power consumption.

## Description

This application claims priority to Chinese Patent Application No. 202310762980.8, filed with the China National Intellectual Property Administration on June 26, 2023 and entitled "OPTICAL IMAGE STABILIZATION APPARATUS AND OPTICAL IMAGE STABILIZATION METHOD", which is incorporated herein by reference in its entirety.

### TECHNICAL FIELD

This application relates to the field of imaging technologies, and in particular, to an optical image stabilization apparatus and an optical image stabilization method.

### BACKGROUND

During handheld photographing, due to some factors, it cannot be ensured that a mobile phone is completely stable. To enhance photographing effect, image stabilization processing is required. Common image stabilization methods include optical image stabilization (Optical Image Stabilization, OIS) and electronic image stabilization (Electronic Image Stabilization, EIS). The electronic image stabilization (EIS) technology is an algorithm based on software post-processing. The optical image stabilization (OIS) is a method for correcting shake through relative displacement of an optical lens (Lens) or an image sensor (Sensor), where shake information of a human hand is obtained by a built-in detection component of the mobile phone, and is calculated by using an algorithm to obtain displacement required for offsetting image stabilization, and a motor is controlled to push the lens or the image sensor to undergo relative displacement, to complete image stabilization.

In the optical image stabilization (OIS), the motor pushes the lens or the image sensor to undergo displacement. In the process of pushing the lens or the image sensor, a large current is required. In other words, an average current flowing through the motor in a period of time determines a position of the motor. Usually, the current is provided by a power management unit (Power Management Unit, PMU) of the mobile phone, and current intensity, a manner, and a driving frequency are controlled by using a motor driver (Driver).

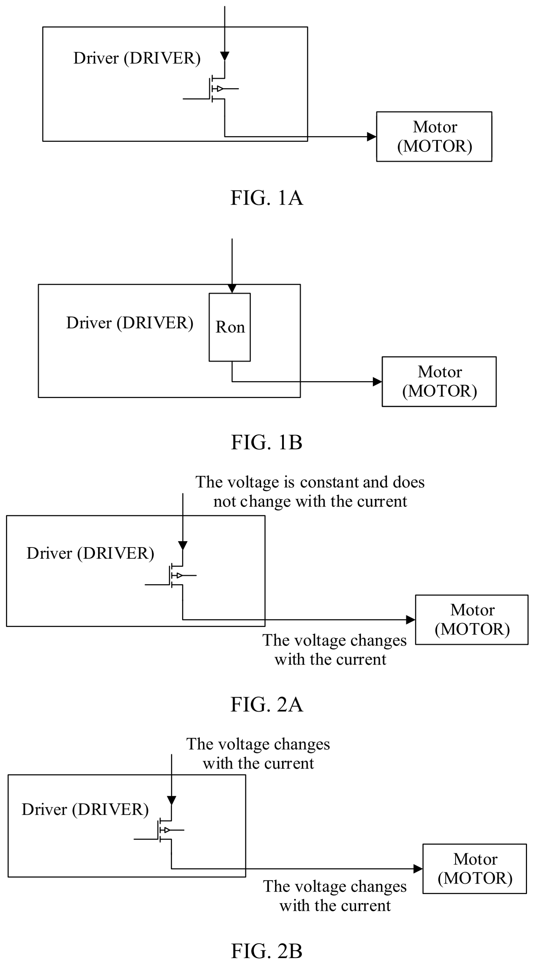

In the conventional technology, refer to FIG. 1A. FIG. 1A shows a current path inside a driver, current intensity of a motor is controlled inside a motor driver based on an image stabilization requirement, and there is usually a component like a MOS transistor or a triode on the current path. When a current is supplied to the motor, refer to FIG. 1B. FIG. 1B shows an equivalent current path inside the driver. In this case, a component on the current path may be equivalent to a conduction resistor Ron, and there is power consumption wasted on Ron. In addition, when the motor driver drives the motor, there is an automatic closed-loop system, so that a higher frequency of driving the motor indicates better performance of the closed-loop system and better effect of responding to OIS displacement, but higher power consumption.

### SUMMARY

Embodiments of this application provide an optical image stabilization apparatus and an optical image stabilization method, to reduce power consumption of the optical image stabilization apparatus while ensuring imaging quality.

According to a first aspect, an embodiment of this application provides an optical image stabilization apparatus, including a motor driver and an image sensor physically connected to the motor driver, where the image sensor is configured to report an operating status of the image sensor to the motor driver, where the operating status includes one or more of an exposure state, a readout state, and an interframe idle state; and the motor driver is configured to: monitor the operating status of the image sensor, and adjust a driving state of the motor driver to a target driving state based on the operating status, where the driving state includes a driving manner and a driving frequency.

This embodiment of this application provides the optical image stabilization apparatus, where a structure of an optical apparatus and a driving adjustment policy are mainly designed. The structure includes the motor driver and the image sensor that are physically connected. The image sensor directly reports different states such as the exposure state, the readout state, or the interframe idle state of the image sensor in an operating period to the motor driver through physical connection. The motor driver may adjust the driving state of the motor driver based on different operating statuses of the image sensor. The driving state specifically includes different driving manners and different driving frequencies, to better adjust a motor, greatly reduce power consumption while ensuring imaging quality, and improve motor performance. In conclusion, this embodiment of this application provides a new low-power management solution for the motor driver. In the solution, the image sensor (Sensor) component is associated with the motor driver (Driver). The motor driver accurately obtains the operating status of the image sensor, and accurately controls the driving manner and the driving frequency of the motor based on different operating statuses of the image sensor, to reduce power consumption while ensuring image shooting quality.

In a possible implementation, the driving manner includes one or more of a linear driving manner, a pulse width modulation PWM driving manner, and a dynamic linear driving manner. In this embodiment of this application, the driving manner may include a plurality of manners, for example, the linear driving manner without electromagnetic radiation interference but with high power consumption, the dynamic linear driving manner without electromagnetic radiation interference but with low power consumption, and the PWM driving manner with electromagnetic radiation but with lower power consumption.

In a possible implementation, the optical image stabilization apparatus further includes the motor, and the motor driver is further configured to drive the motor in the target driving state to push the image sensor or a lens to undergo target displacement. Essence of optical image stabilization is as follows: The motor driver drives the motor, so that the motor can push the image sensor or the lens to undergo target displacement, to offset shake displacement of a human hand, and finally implement optical image stabilization. That is, it is a method for correcting shake through relative displacement of the image sensor (Sensor). For example, shake information of the human hand is obtained by a built-in detection component of a mobile phone, and is calculated by using an algorithm to obtain displacement required for offsetting image stabilization, and then a motor is controlled to push the lens or the image sensor to undergo relative displacement, to complete image stabilization.

In a possible implementation, when the operating status is the exposure state, the target driving state includes the PWM driving manner and a first driving frequency in a high-speed state. When the image sensor is in an exposure time period in an imaging phase, the image sensor has a high requirement on optical image stabilization, but is insensitive to electromagnetic radiation. Specifically, the image sensor is sensitive to shake of a human hand in an exposure phase. In this case, maintaining a driving frequency in the high-speed state helps improve imaging quality. In addition, the motor driver generates different degrees of power consumption and causes different electromagnetic radiation interference in different driving manners. For example, when the driving manner of the motor driver is the pulse width modulation PWM driving manner, because a current output by the motor driver is a periodic square wave, the current output by the motor driver has a specific frequency, and therefore, electromagnetic radiation is generated, which interferes with the image sensor (which may cause a decrease in image quality). However, in this manner, power consumption can be greatly reduced. In addition, because electromagnetic radiation affects a readout circuit of the image sensor (in other words, an image sensor in a phase in which the readout state is not included is not affected by electromagnetic radiation), the image sensor that is only in the exposure state is insensitive to electromagnetic radiation, and is suitable for using the PWM driving manner. Therefore, in this embodiment of this application, when the operating status of the image sensor is the exposure state in the imaging phase, the driving manner of the motor driver may be adjusted to the pulse width modulation (PWM) driving manner (to reduce power consumption while meeting low electromagnetic radiation sensitivity) and the high-frequency state (to meet a high image stabilization requirement), to ensure both high imaging quality and low power consumption.

In a possible implementation, when the operating status is both the exposure state and the readout state, the target driving state includes the dynamic linear driving manner and a first driving frequency in a high-speed state. When the image sensor is in an exposure time period and a readout time period in an imaging phase, the image sensor has a high requirement on optical image stabilization, and is sensitive to electromagnetic radiation. Specifically, the image sensor is sensitive to shake of a human hand in exposure and readout phases. In this case, maintaining a driving frequency in the high-speed state helps improve imaging quality. In addition, the motor driver generates different degrees of power consumption and causes different electromagnetic radiation interference in different driving manners. For example, when the driving manner of the motor driver is the dynamic linear driving manner, current intensity supplied to the motor is always the same as average current intensity of the motor for maintaining displacement of the motor. After optical image stabilization is enabled, a MOS transistor or a triode inside the motor driver always remains in an on state, a voltage of a power management unit end of a power supply always remains constant, and power consumption on Ron is (Vin-VO)*I. In this manner, there is no electromagnetic radiation interference to a peripheral component, and power consumption is lower than that of linear driving. Because electromagnetic radiation affects a readout circuit of the image sensor (in other words, an image sensor in a phase that includes the readout state is affected by electromagnetic radiation), the image sensor that is in both the exposure time period and the readout time period is sensitive to electromagnetic radiation, and is not suitable for using the PWM driving manner. In addition, because power consumption in the linear driving manner is high, the image sensor is suitable for using the dynamic linear driving manner. Therefore, in this embodiment of this application, when the operating status of the image sensor is both the exposure state and the readout state in the imaging phase, the driving manner of the motor driver may be adjusted to the dynamic linear driving manner (to reduce power consumption while meeting high electromagnetic radiation sensitivity) and the high-frequency state (to meet a high image stabilization requirement), to improve imaging quality.

In a possible implementation, when the operating status is the readout state, the target driving state includes the dynamic linear driving manner and a second driving frequency in a low-speed state. When the image sensor is only in a readout time period, the image sensor has a low requirement on optical image stabilization, but is sensitive to electromagnetic radiation. Specifically, the image sensor has the low requirement on optical image stabilization in a readout phase. In this case, maintaining a driving frequency in the low-speed state helps reduce power consumption. In addition, the motor driver generates different degrees of power consumption and causes different electromagnetic radiation interference in different driving manners. For example, when the driving manner of the motor driver is the dynamic linear driving manner, current intensity supplied to the motor is always the same as average current intensity of the motor for maintaining displacement of the motor. After optical image stabilization is enabled, a MOS transistor or a triode inside the motor driver always remains in an on state, a voltage of a power management unit end of a power supply always remains constant, and power consumption on Ron is (Vin-VO)*I. In this manner, there is no electromagnetic radiation interference to a peripheral component, and power consumption is lower than that of linear driving. Because electromagnetic radiation affects a readout circuit of the image sensor (in other words, an image sensor in a phase that includes a readout state is affected by electromagnetic radiation), the image sensor that is in both the exposure time period and the readout time period is sensitive to electromagnetic radiation, and is not suitable for using the PWM driving manner. In addition, because power consumption in the linear driving manner is high, the image sensor is suitable for using the dynamic linear driving manner. Therefore, in this embodiment of this application, when the operating status of the image sensor is only in the readout state, the driving manner of the motor driver may be adjusted to the dynamic linear driving manner (to reduce power consumption while meeting high electromagnetic radiation sensitivity) and the low-speed frequency state (to reduce power consumption while meeting a low image stabilization requirement), to ensure both high imaging quality and low power consumption. In addition, it may be understood that in this embodiment of this application, the first driving frequency is greater than the second driving frequency.

In a possible implementation, when the operating status is the interframe idle state, the target driving state includes the PWM driving manner and a second driving frequency in a low-speed state. When the image sensor is in an interframe idle phase, the image sensor has a low requirement on optical image stabilization, and is also insensitive to electromagnetic radiation. Specifically, the image sensor has the low requirement on optical image stabilization in a readout phase. In this case, maintaining a driving frequency in the low-speed state helps reduce power consumption. In addition, the motor driver generates different degrees of power consumption and causes different electromagnetic radiation interference in different driving manners. For example, when the driving manner of the motor driver is the pulse width modulation PWM driving manner, because a current output by the motor driver is a periodic square wave, the current output by the motor driver has a specific frequency, and therefore, electromagnetic radiation is generated, which interferes with the image sensor (which may cause a decrease in image quality). However, in this manner, power consumption can be greatly reduced. In addition, because electromagnetic radiation affects a readout circuit of the image sensor (in other words, an image sensor in a phase in which the readout state is not included is not affected by electromagnetic radiation), the image sensor that is in the interframe idle state is insensitive to electromagnetic radiation, and is suitable for using the PWM driving manner. Therefore, in this embodiment of this application, when the operating status of the image sensor is in the interframe idle phase (namely, an interframe interval phase), the driving manner of the motor driver may be adjusted to the PWM driving manner (to reduce power consumption while meeting low electromagnetic radiation sensitivity) and the low-speed frequency state (to reduce power consumption while meeting a low image stabilization requirement), to ensure both high imaging quality and low power consumption.

In a possible implementation, the image sensor is specifically configured to report the exposure state to the motor driver at a moment t2 before an exposure start moment T2 of the image sensor. The motor driver is specifically configured to complete switching from the driving state to the target driving state before the exposure moment T2 after receiving the exposure state reported by the image sensor at the moment t2.

In this embodiment of this application, the image sensor may report the operating status of the image sensor to the motor driver in advance through status output control, so that the motor driver can prepare for switching of the driving manner and the driving frequency in advance. A reason is that it takes a specific time to switch from one driving state to another driving state. In this way, the motor driver can complete switching of the driving manner when the image sensor actually enters a corresponding operating status, so that the driving state of the motor driver matches the operating status of the image sensor more accurately, to better implement high imaging quality and low power consumption.

In a possible implementation, the image sensor is specifically configured to report the readout state to the motor driver at a moment t1 before a readout start moment T1 of the image sensor. The motor driver is specifically configured to complete switching from the driving state to the target driving state before the readout moment T1 after receiving the readout state reported by the image sensor at the moment t1.

In this embodiment of this application, the image sensor may report the operating status of the image sensor to the motor driver in advance through status output control, so that the motor driver can prepare for switching of the driving manner and the driving frequency in advance. A reason is that it takes a specific time to switch from one driving state to another driving state. In this way, the motor driver can complete switching of the driving manner when the image sensor actually enters a corresponding operating status, so that the driving state of the motor driver matches the operating status of the image sensor more accurately, to better implement high imaging quality and low power consumption.

In a possible implementation, the image sensor is connected to the motor driver through an input/output I/O interface. The image sensor is specifically configured to report the operating status of the image sensor to the motor driver through the I/O interface.

In this embodiment of this application, the image sensor is physically connected to the motor driver through the I/O interface, and the image sensor may report the operating status of the image sensor to the motor driver in real time through the I/O interface, for example, the image sensor is currently in the exposure state, the exposure and readout states, or the interframe idle state, so that the motor driver subsequently adjusts the driving manner and the driving frequency of the motor driver based on the operating status of the image sensor, to accurately drive the motor, thereby better implementing high imaging quality and low power consumption.

According to a second aspect, an embodiment of this application provides an optical image stabilization method, which may be applied to an optical image stabilization apparatus. The optical image stabilization apparatus includes a motor driver and an image sensor physically connected to the motor driver. The method may include:
reporting an operating status of the image sensor to the motor driver by the image sensor, where the operating status includes one or more of an exposure state, a readout state, and an interframe idle state; and
monitoring the operating status of the image sensor by the motor driver, and adjusting a driving state of the motor driver to a target driving state based on the operating status, where the driving state includes a driving manner and a driving frequency.

In a possible implementation, the driving manner includes one or more of a linear driving manner, a pulse width modulation PWM driving manner, and a dynamic linear driving manner.

In a possible implementation, the optical image stabilization apparatus further includes a motor; and the method further includes:
driving, by the motor driver, the motor in the target driving state to push the image sensor or a lens to undergo target displacement.

In a possible implementation, when the operating status is the exposure state, the target driving state includes the PWM driving manner and a first driving frequency in a high-speed state.

In a possible implementation, when the operating status is both the exposure state and the readout state, the target driving state includes the dynamic linear driving manner and a first driving frequency in a high-speed state.

In a possible implementation, when the operating status is the readout state, the target driving state includes the dynamic linear driving manner and a second driving frequency in a low-speed state.

In a possible implementation, when the operating status is the interframe idle state, the target driving state includes the PWM driving manner and a second driving frequency in a low-speed state.

In a possible implementation, reporting the operating status of the image sensor to the motor driver by the image sensor includes: reporting the exposure state to the motor driver at a moment t2 before an exposure start moment T2 of the image sensor; and
monitoring the operating status of the image sensor by the motor driver, and adjusting the driving state of the motor driver to the target driving state based on the operating status includes: completing, by the motor driver, switching from the driving state to the target driving state before the exposure moment T2 after receiving the exposure state reported by the image sensor at the moment t2.

In a possible implementation, reporting the operating status of the image sensor to the motor driver by the image sensor includes: reporting the readout state to the motor driver at a moment t1 before a readout start moment T1 of the image sensor; and
monitoring the operating status of the image sensor by the motor driver, and adjusting the driving state of the motor driver to the target driving state based on the operating status includes: completing, by the motor driver, switching from the driving state to the target driving state before the readout moment T1 after receiving the readout state reported by the image sensor at the moment t1.

In a possible implementation, the image sensor is connected to the motor driver through an input/output I/O interface; and reporting the operating status of the image sensor to the motor driver by the image sensor includes:
reporting, by the image sensor, the operating status of the image sensor to the motor driver through the I/O interface.

According to a third aspect, an embodiment of this application provides a camera device, which may include the optical image stabilization apparatus provided in any implementation of the first aspect, a motor, an inertial measurement unit IMU, and a motor position detector. The IMU is configured to detect shake information of the apparatus. The motor driver is configured to drive, based on the shake information, the motor to undergo image stabilization displacement. The motor position detector is configured to correct the image stabilization displacement of the motor.

According to a fourth aspect, an embodiment of this application provides an electronic device, which may include the optical image stabilization apparatus provided in any implementation of the first aspect and a processor. The processor is configured to send an image shooting instruction to the image sensor in the optical image stabilization apparatus. The image sensor is configured to enter a corresponding operating status according to the received image shooting instruction, where the operating status includes one or more of the exposure state, the readout state, and the interframe idle state.

In a possible implementation, the electronic device further includes a memory, configured to store program instructions. The program instructions are executed by the processor.

According to a fifth aspect, an embodiment of this application provides an electronic device, which may include a processor and a memory.

The memory is configured to store program code, and the processor is configured to invoke the program code stored in the memory, to perform the following steps:
reporting an operating status of an image sensor to a motor driver by the image sensor, where the operating status includes one or more of an exposure state, a readout state, and an interframe idle state; and
monitoring the operating status of the image sensor by the motor driver, and adjusting a driving state of the motor driver to a target driving state based on the operating status, where the driving state includes a driving manner and a driving frequency.

According to a sixth aspect, an embodiment of this application provides a system on a chip SoC, which may include a motor driver and an I/O interface. The motor driver is connected to an image sensor through the I/O interface.

The I/O interface is configured for the image sensor to report an operating status of the image sensor to the motor driver, where the operating status includes one or more of an exposure state, a readout state, and an interframe idle state.

The motor driver is configured to: monitor the operating status of the image sensor through the I/O interface, and adjust a driving state of the motor driver to a target driving state based on the operating status, where the driving state includes a driving manner and a driving frequency.

In a possible implementation, the driving manner includes one or more of a linear driving manner, a pulse width modulation PWM driving manner, and a dynamic linear driving manner.

In a possible implementation, the motor driver is further connected to a motor, and the motor driver is further configured to drive the motor in the target driving state to push the image sensor or a lens to undergo target displacement.

In a possible implementation, when the operating status is the exposure state, the target driving state includes the PWM driving manner and a first driving frequency in a high-speed state.

In a possible implementation, when the operating status is both the exposure state and the readout state, the target driving state includes the dynamic linear driving manner and a first driving frequency in a high-speed state.

In a possible implementation, when the operating status is the readout state, the target driving state includes the dynamic linear driving manner and a second driving frequency in a low-speed state.

In a possible implementation, when the operating status is the interframe idle state, the target driving state includes the PWM driving manner and a second driving frequency in a low-speed state.

In a possible implementation, the I/O interface is specifically configured to: report, by the image sensor, the exposure state to the motor driver at a moment t2 before an exposure start moment T2 of the image sensor; and the motor driver is specifically configured to complete switching from the driving state to the target driving state before the exposure moment T2 after receiving the exposure state reported by the image sensor at the moment t2 through the I/O interface.

In a possible implementation, the I/O interface is specifically configured to: report, by the image sensor, the readout state to the motor driver at a moment tl before a readout start moment T1 of the image sensor; and the motor driver is specifically configured to complete switching from the driving state to the target driving state before the readout moment T1 after receiving the readout state reported by the image sensor at the moment t1 through the I/O interface.

According to a seventh aspect, this application provides a semiconductor chip. The semiconductor chip may include the SoC provided in any implementation of the sixth aspect.

According to an eighth aspect, this application provides a semiconductor chip. The semiconductor chip may include the SoC provided in any implementation of the sixth aspect, an internal memory coupled to the SoC, and an external memory.

According to a ninth aspect, this application provides an optical image stabilization system on a chip SoC. The optical image stabilization SoC includes the SoC provided in any implementation of the sixth aspect, an internal memory coupled to the SoC, and an external memory. The optical image stabilization SoC may include a chip, or may include a chip and another discrete component.

According to a tenth aspect, this application provides a chip system. The chip system may include the optical image stabilization apparatus provided in any implementation of the first aspect. In a possible design, the chip system further includes a memory. The memory is configured to store necessary or related program instructions and data in a running process of the optical image stabilization apparatus. The chip system may include a chip, or may include a chip and another discrete component.

According to an eleventh aspect, this application provides an optical image stabilization device. The optical image stabilization device has a function of implementing the optical image stabilization method provided in any implementation of the second aspect. The function may be implemented by hardware, or may be implemented by hardware executing corresponding software. The hardware or the software includes one or more modules corresponding to the function.

According to a twelfth aspect, an embodiment of this application provides a computer-readable storage medium. The computer-readable medium is configured to store program code. When the program code is executed by a processor, the optical image stabilization method provided in any implementation of the second aspect is implemented.

According to a thirteenth aspect, an embodiment of this application provides a computer program. The computer program includes instructions. When the instructions are executed by a processor, the processor is enabled to perform the optical image stabilization method provided in any implementation of the second aspect.

### BRIEF DESCRIPTION OF DRAWINGS

To describe the technical solutions in embodiments of this application or in the background more clearly, the following describes the accompanying drawings for describing embodiments of this application or the background.
FIG. 1A shows a current path inside a driver;
FIG. 1B shows an equivalent current path inside a driver;
FIG. 2A is a diagram of linear voltage regulation corresponding to a linear driving manner in the conventional technology;
FIG. 2B is a diagram of dynamic linear voltage regulation corresponding to a dynamic linear driving manner in the conventional technology;
FIG. 2C is a diagram of a driver current output corresponding to a pulse width modulation driving manner in the conventional technology;
FIG. 2D is a diagram of another driver current output corresponding to a pulse width modulation driving manner in the conventional technology;
FIG. 2E is a diagram of a driver current output corresponding to a PWM and linear driving combination manner in the conventional technology;
FIG. 3A-1 and FIG. 3A-2 are diagrams of an application scenario of photographing image stabilization of a mobile phone according to an embodiment of the present invention;

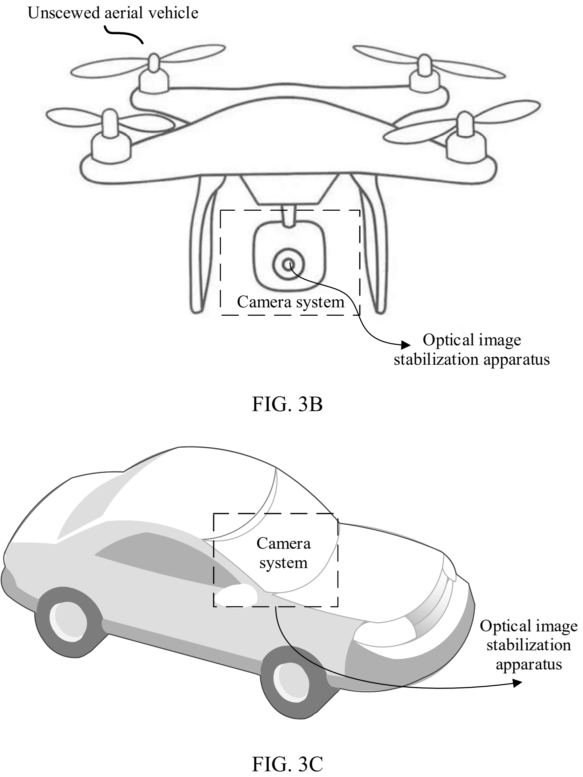

FIG. 3B is a diagram of a scenario of optical image stabilization of an unscrewed aerial vehicle according to an embodiment of the present invention;
FIG. 3C is a diagram of a scenario of optical image stabilization of an intelligent vehicle-mounted device according to an embodiment of the present invention;

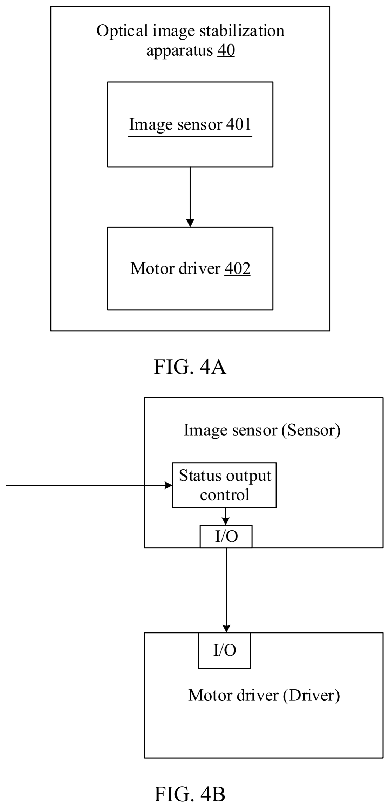

FIG. 4A is a diagram of a hardware structure of an optical image stabilization apparatus according to an embodiment of this application;
FIG. 4B is a diagram of a hardware structure of another optical image stabilization apparatus according to an embodiment of this application;

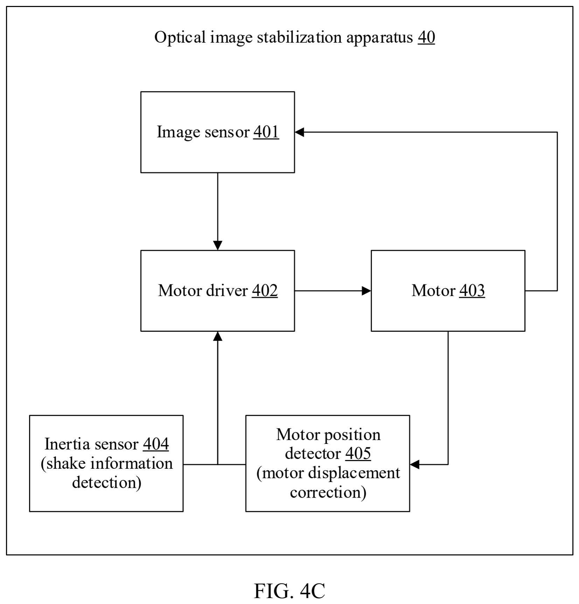

FIG. 4C is a diagram of a hardware structure of another optical image stabilization apparatus according to an embodiment of this application;

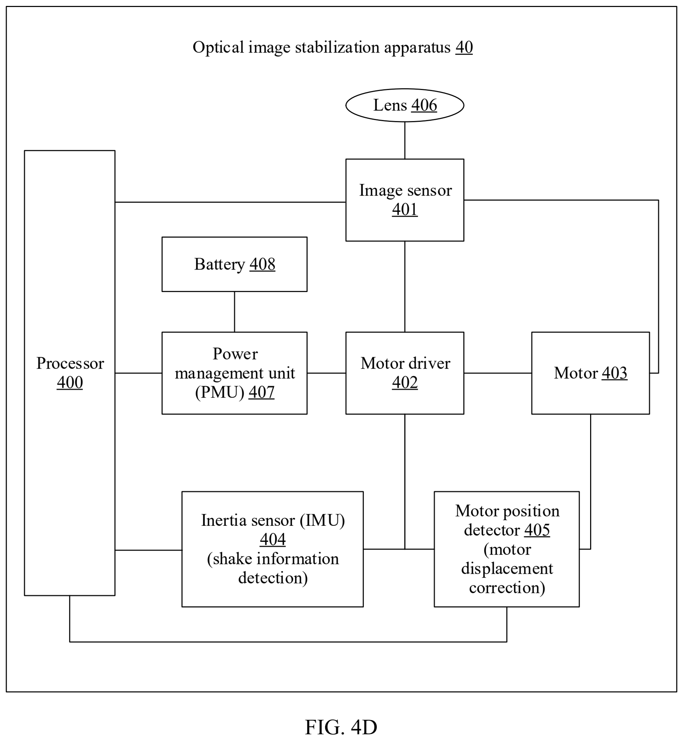

FIG. 4D is a diagram of a hardware structure of another optical image stabilization apparatus according to an embodiment of this application;

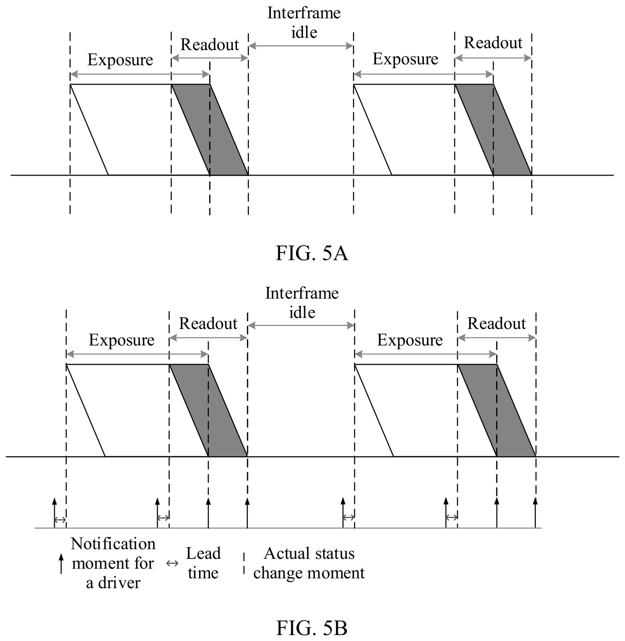

FIG. 5A is a diagram of an operating range of an image sensor according to an embodiment of this application;
FIG. 5B is a diagram of status notification and switching moments of an image sensor according to an embodiment of this application;

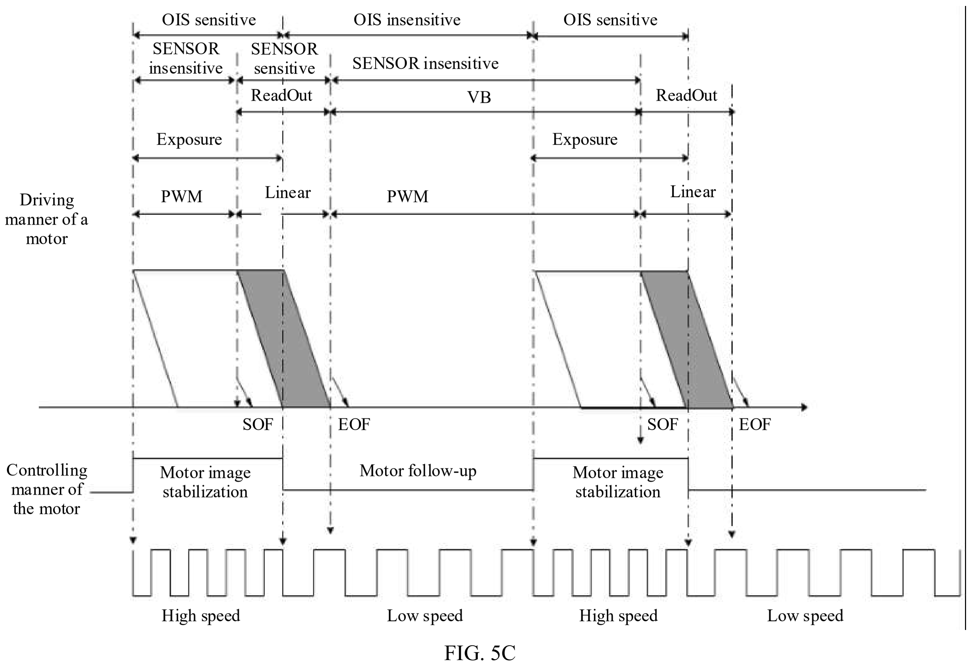

FIG. 5C is a diagram of an operating range of a motor driver according to an embodiment of this application;

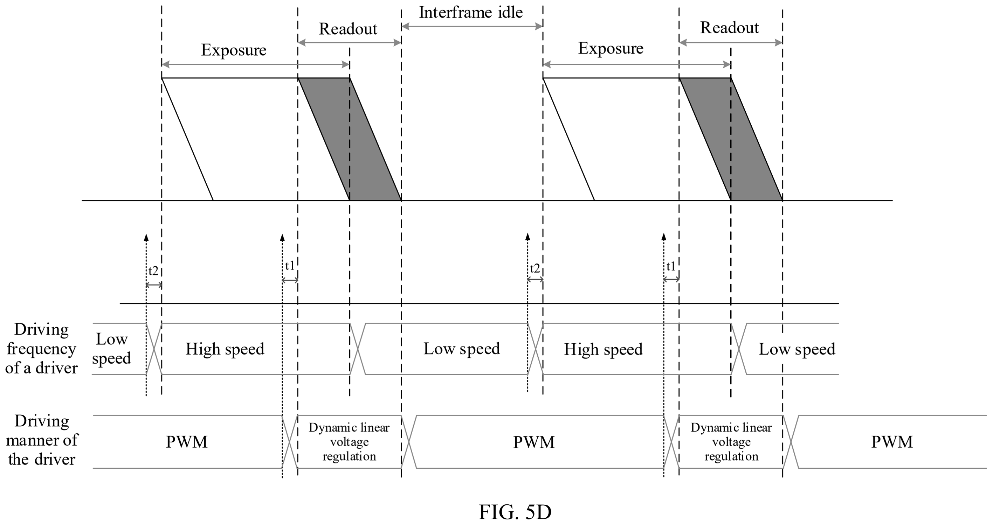

FIG. 5D is a diagram of joint operation of an image sensor and a motor driver according to an embodiment of this application; and

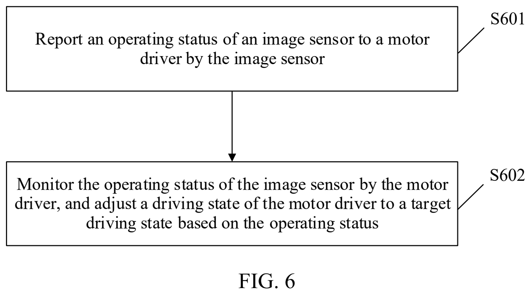

FIG. 6 is a schematic flowchart of an optical image stabilization method according to an embodiment of this application.

### DESCRIPTION OF EMBODIMENTS

The following describes embodiments of this application with reference to the accompanying drawings in embodiments of this application.

In the specification, claims, and accompanying drawings of this application, the terms "first", "second", "third", "fourth", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned in this specification means that specific features, structures, or characteristics described with reference to embodiments may be included in at least one embodiment of this application. The phrase shown in various locations in the specification may not necessarily refer to a same embodiment, and is not an independent or optional embodiment exclusive from another embodiment. It is explicitly and implicitly understood by persons skilled in the art that embodiments described in the specification may be combined with another embodiment.

The terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. The components may communicate by using a local and/or remote process and based on, for example, a signal having one or more data packets (for example, data from two components interacting with another component in a local system, a distributed system, and/or across a network such as the Internet interacting with other systems by using the signal).

Some terms in this application are first described, to help persons skilled in the art have a better understanding.
(1) A charge-coupled device (Charge-coupled Device, CCD) may be referred to as a CCD image sensor, which can convert optical images into digital signals. The CCD has many neatly arranged capacitors that can sense light and convert images into digital signals. The CCD acts like film, but the CCD converts image pixels into digital signals. Tiny light-sensitive substances implanted on the CCD are called pixels (Pixels). More pixels included in one CCD indicates higher image resolution of the CCD. CCD cameras including the CCD are widely used due to features of small size, light weight, and resistance to magnetic field, shock, and impact.
(2) A complementary metal-oxide-semiconductor (Complementary Metal-Oxide-Semiconductor, CMOS) image sensor is a typical solid-state image sensor. The CMOS image sensor usually includes parts such as an image sensitive element array, a row driver, a column driver, timing control logic, an analog-to-digital (Analog-to-Digital, AD) converter, a data bus output interface, and a control interface. These parts are usually integrated on a same silicon wafer. An operating process of the CMOS image sensor is generally divided into the following parts: resetting, optical-to-electrical conversion, integration, and readout.
(3) An optical image stabilizer (Optical Image Stabilizer, OIS) is an optical image stabilization device whose function is to correct an "optical axis offset" through a floating lens element of a lens. The function is also referred to as optical image stabilization.
(4) Electronic image stabilization (Electronic Image Stabilization, EIS) mainly means image stabilization implemented by forcibly increasing CCD photosensitive parameters on a digital camera, accelerating a shutter speed, analyzing an image obtained on a CCD, and then compensating for the image by using edge images. The electronic image stabilization is actually a technology that compensates for shake by reducing image quality. This technology attempts to strike a balance between image quality and image shake. Compared with optical image stabilization, this technology costs much less (actually, only some adjustments are required on internal software of a common digital camera), and also has poor effect.
(5) Pulse width modulation (Pulse width modulation, PWM) is an analog control manner, where an offset of a base of a transistor or a gate of a MOS transistor is modulated according to a change of corresponding load, to change a turning-on time of the transistor or the MOS transistor, and further change the output of a switched-mode power supply. In this manner, an output voltage of the power supply can remain constant when an operating condition changes, and this manner is an extremely effective technology for controlling an analog circuit by using a digital signal of a microprocessor.
(6) Exposure (exposure) area and readout (ReadOut) area: An image sensor (Sensor) performs exposure row by row, where exposure starts from the first row, and only after a row period ends, exposure starts from the second row; and similarly, exposure starts from the N^{th} row after the (N-1)^{th} row. After exposure of the first row ends, data readout starts. Readout in one row requires one row period (including a row blanking time, namely, H_Blank). After readout in the first row is completed, readout in the second row starts. Similarly, after readout in the (N-1)^{th} row is completed, readout in the N^{th} row starts until the entire image is completely read out. The exposure (exposure) area and the readout (ReadOut) area may overlap in time.

First, for ease of understanding embodiments of this application, a technical problem to be specifically resolved in this application is further proposed and analyzed. In the conventional technology, there are a plurality of technical solutions for managing a current and a driving frequency of a motor driver (Driver). The following lists four common technical solutions. Details are described below.

### Solution 1: linear driving

Refer to FIG. 2A. FIG. 2A is a diagram of linear voltage regulation corresponding to a linear driving manner in the conventional technology. Current intensity supplied to a motor is always the same as average current intensity of the motor for maintaining displacement of the motor. After optical image stabilization is enabled, a MOS transistor or a triode inside a driver (Driver) always remains in an on state, and a voltage of a PMU end always remains constant. Power consumption on Ron is (Vin-VO)*I. In this manner, there is no electromagnetic radiation interference to a peripheral component, but power consumption is high.

### Solution 2: dynamic linear driving

Refer to FIG. 2B. FIG. 2B is a diagram of dynamic linear voltage regulation corresponding to a dynamic linear driving manner in the conventional technology. Current intensity supplied to a motor is always the same as average current intensity of the motor for maintaining displacement of the motor. After optical image stabilization is enabled, a MOS transistor or a triode inside a driver (Driver) always remains in an on state, and a voltage of a PMU end changes with an average current of the motor. A voltage difference between two ends may always be small. In this manner, there is no electromagnetic radiation interference to a peripheral component, and power consumption is lower than that of the linear driving.

### Solution 3: pulse width modulation (PWM) driving

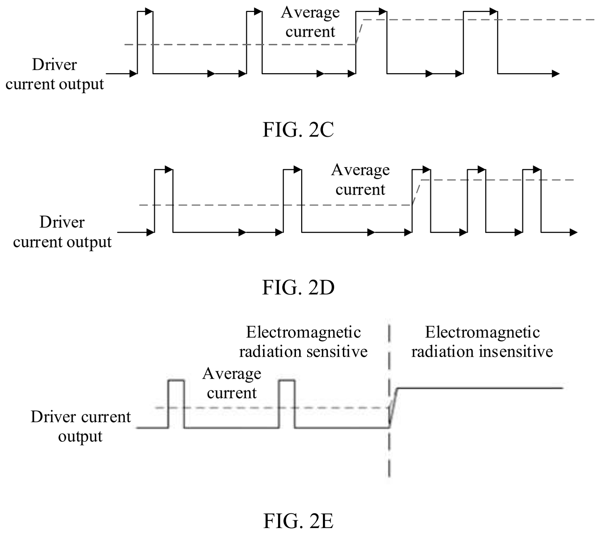

Refer to FIG. 2C and FIG. 2D. FIG. 2C is a diagram of a driver current output corresponding to a pulse width modulation driving manner in the conventional technology. FIG. 2D is a diagram of another driver current output corresponding to a pulse width modulation driving manner in the conventional technology. A current output by a driver (Driver) is a periodic square wave. An average current of a motor is adjusted by changing a duty cycle or a frequency of the square wave, to change a position. In this manner, power consumption can be greatly reduced. However, because the output current has a specific frequency, electromagnetic radiation is generated, which interferes with a peripheral component like an image sensor (Sensor), causing a decrease in image quality.

### Solution 4: PWM and linear driving combination manner

Refer to FIG. 2E. FIG. 2E is a diagram of a driver current output corresponding to a PWM and linear driving combination manner in the conventional technology. A linear driving manner is used in a time period in which a peripheral component is sensitive to electromagnetic radiation, and a PWM driving manner is used in a time period in which the peripheral component is insensitive to the electromagnetic radiation. Currently, this manner depends on a sensor output frame or an indirect output signal to determine or predict an electromagnetic-radiation-sensitive time period. As a result, power consumption optimization cannot reach optimal effect, and space radiation cannot be completely avoided. In addition, power consumption in a linear driving phase is high.

In conclusion, each of the foregoing four driving solutions has a defect, and cannot balance image shooting quality and power consumption. Consequently, problems such as excessively high power consumption and poor image shooting quality exist. Therefore, the technical problem to be resolved in this application may include the following aspects: providing a manner of managing the current and the driving frequency of the motor driver (Driver), to reduce internal power consumption of the motor driver while avoiding impact on another component like the image sensor, that is, reducing power consumption while ensuring image shooting quality.

The optical image stabilization apparatus in this application can be used in a plurality of electronic devices having an optical image stabilization image shooting function, for example, a smartphone, smart glasses, a smart wearable device, an augmented reality device, a digital camera, a video camera, a portable image shooting device, an optical device, an unscrewed aerial vehicle, a smart band, and a robot. The electronic devices are not enumerated herein. Examples of application scenarios of the optical image stabilization apparatus in this application are enumerated in the following, and may include the following three scenarios.

Scenario 1: Implement a photographing image stabilization function of a mobile phone by using the optical image stabilization apparatus in this application.

Refer to FIG. 3A-1 and FIG. 3A-2. FIG. 3A-1 and FIG. 3A-2 are diagrams of an application scenario of photographing image stabilization of a mobile phone according to an embodiment of the present invention. In this application scenario, when a touchscreen of the mobile phone detects a photographing operation of a user, the mobile phone may display a photographing user interface 31 shown as an example in FIG. 3A-1 and FIG. 3A-2 in response to the photographing operation. Refer to FIG. 3A-1 and FIG. 3A-2. FIG. 3A-1 and FIG. 3A-2 show examples of the photographing user interface 31 and a photographing user interface 32 of a "camera" application on an electronic device like a smartphone. The photographing user interface 31 may include a photo viewing control 301, a photographing control 302, a camera switching control 303, and an image shooting interface 304. Further, the photographing user interface 31 may further include an optical image stabilization control 305. When the user wants to perform image stabilization image shooting (including photographing or video shooting), the user may tap the optical image stabilization control 305 (the photographing user interface 31) to enable an optical image stabilization function. For example, as shown in the photographing user interface 32, "Optical image stabilization enabled" indicates that the mobile phone may implement the optical image stabilization function for the user by using a related function of any optical image stabilization apparatus provided in this application, to improve image shooting quality. Optionally, the bottom of the photographing user interface 31 or the photographing user interface 32 may further include an image shooting mode option list, for example, may include a night mode option, a portrait mode option, a photo mode option, a video mode option, and a more photographing-mode option.

Scenario 2: Implement an image shooting function of an image shooting system of an unscrewed aerial vehicle by using the optical image stabilization apparatus in this application.

Refer to FIG. 3B. FIG. 3B is a diagram of a scenario of optical image stabilization of an unscrewed aerial vehicle according to an embodiment of the present invention. The unscrewed aerial vehicle in this application scenario may include a main body, a power system, a flight control system, a link system, mission load, and the like. A photographing system of the unscrewed aerial vehicle may perform aerial photography, and may further perform forest fire prevention, earthquake investigation, nuclear radiation detection, border patrol, emergency relief, crop yield estimation, pipeline inspection, protected area wildlife monitoring, military reconnaissance, and the like. However, during aerial photography of the aerial photography unscrewed aerial vehicle, due to high-altitude airflow, resistance, and vibration of the unscrewed aerial vehicle, it is often difficult to ensure image stability. However, the unscrewed aerial vehicle may improve image shooting quality of the unscrewed aerial vehicle by using a related function of any optical image stabilization apparatus provided in this application. For example, the load of the aerial photography unscrewed aerial vehicle generally includes the following content: a camera, a pan-tilt-zoom, and an image transfer system. The camera may include any optical image stabilization apparatus provided in this application, to improve image shooting quality of the unscrewed aerial vehicle.

Scenario 3: Implement an image shooting function of an image shooting system of an intelligent vehicle-mounted device by using the optical image stabilization apparatus in this application.

Refer to FIG. 3C. FIG. 3C is a diagram of a scenario of optical image stabilization of an intelligent vehicle-mounted device according to an embodiment of the present invention. An intelligent vehicle-mounted system in this application scenario may include an intelligent driving system, an intelligent interconnection system, an intelligent monitoring system, and the like. The vehicle-mounted monitoring system is a system that monitors internal and external environments of a vehicle by using technologies such as computer vision, the Internet of Things, and artificial intelligence, and provides real-time alarms and data records. The system may help a driver predict potential dangers and improve driving safety. The monitoring system may include at least a camera, a radar, an infrared sensor, and the like. For example, safety monitoring is provided, where in-vehicle and out-of-vehicle cameras and sensors are used to monitor the vehicle and a surrounding environment, and provide instant alarms, to help the driver avoid the potential dangers. For another example, behavior analysis is provided, where the intelligent vehicle-mounted monitoring system may help recognize abnormal behavior, for example, driver fatigue, distraction, and drinking, by analyzing movement of a person and an object inside and outside the vehicle. The in-vehicle and out-of-vehicle cameras may include any optical image stabilization apparatus provided in this application, to improve image shooting quality in a vehicle-mounted scenario.

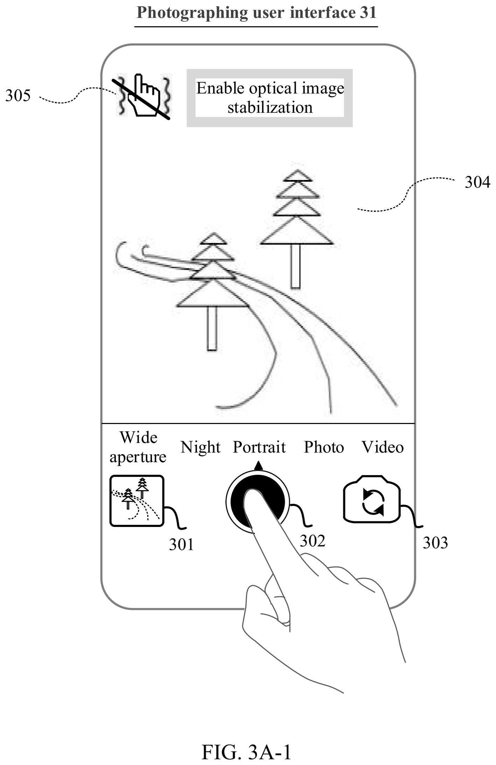

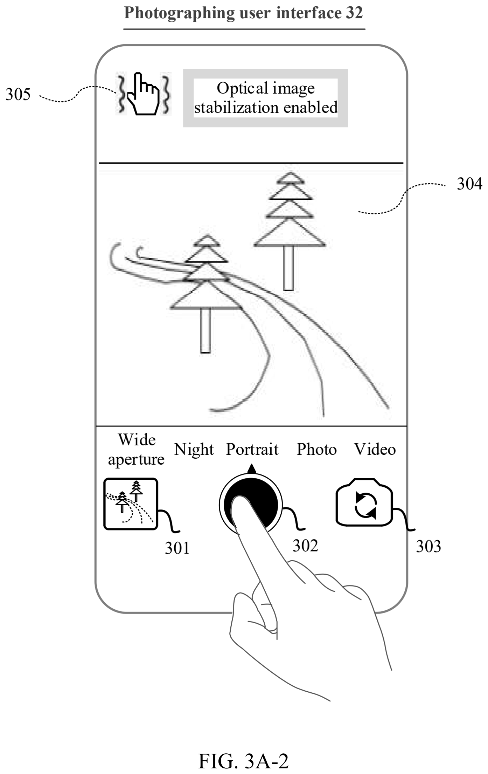

It may be understood that the application scenarios in FIG. 3A-1 to FIG. 3C are merely several example implementations in embodiments of the present invention, and the application scenarios in embodiments of the present invention include but are not limited to the foregoing application scenarios. The optical image stabilization apparatus or method in this application may be further applied to application scenarios such as real-time image shooting of augmented reality glasses, a vision system of a robot, or a professional digital camera. Other scenarios and examples are not enumerated and described again.

Refer to FIG. 4A. FIG. 4A is a diagram of a hardware structure of an optical image stabilization apparatus according to an embodiment of this application. The optical image stabilization apparatus 40 may be located in any electronic device, for example, a computer, a computing device, a mobile phone, or a tablet. The hardware structure of the optical image stabilization apparatus 40 may be specifically a chip, a chip set, or a circuit board equipped with a chip or a chip set. The chip, the chip set, or the circuit board equipped with the chip or the chip set may operate when driven by necessary software. The optical image stabilization apparatus 40 shown in FIG. 4A may include a motor driver 402 and an image sensor 401 physically connected to the motor driver 402.

The image sensor 401 is configured to report an operating status of the image sensor 401 to the motor driver 402, where the operating status includes one or more of an exposure state, a readout state, and an interframe idle state. In a possible implementation, refer to FIG. 4B. FIG. 4B is a diagram of a physical connection between an image sensor and a motor driver according to an embodiment of this application. The image sensor 401 is connected to the motor driver 402 through an input/output I/O interface. The image sensor 401 is specifically configured to: generate a readout signal and an exposure signal based on a status output control module, and report the operating status of the image sensor 401 to the motor driver 402 through the I/O interface. The image sensor 401 converts an optical image on a light-sensitive surface into an electrical signal in a corresponding proportion to the optical image by using an optical-to-electrical conversion function of an optoelectronic device. Optionally, the image sensor 401 may be a charge coupled device (charge coupled device, CCD), namely, a CCD image sensor, or the image sensor 401 may be a complementary metal-oxide-semiconductor (complementary metal-oxide-semiconductor, CMOS) photoelectric transistor, namely, a CMOS image sensor. For example, the image sensor 401 converts an optical signal into an electrical signal, and then transmits the electrical signal to an image signal processor (ISP) to convert the electrical signal into a digital image signal. The ISP then outputs the digital image signal to a digital signal processor (DSP) for processing. Finally, the DSP converts the digital image signal into an image signal in a standard format like RGB or YUV. Optionally, the image sensor 401 may be inside a camera. For example, the image sensor 401 may belong to a camera module. The camera module not only includes the image sensor 401, but also may include a lens, a motor, a motor position detector, and the like.

The motor driver 402 is configured to: monitor the operating status reported by the image sensor 401, and adjust a driving state of the motor driver 402 to a target driving state based on the operating status, where the driving state includes a driving manner and a driving frequency. In a possible implementation, the driving manner includes one or more of a linear driving manner, a pulse width modulation PWM driving manner, and a dynamic linear driving manner. For example, the motor driver 402 is a device for controlling a rotation speed and a rotation direction of the motor. A principle of the motor driver 402 is to control the rotation speed and the rotation direction of the motor by controlling an output voltage and current. Specifically, the motor driver 402 converts an input power supply voltage into a voltage and a current suitable for the motor, and drives the motor to rotate by controlling a power output in a circuit.

Further, refer to FIG. 4C. FIG. 4C is a diagram of a hardware structure of another optical image stabilization apparatus according to an embodiment of this application. The optical image stabilization apparatus may further include one or more of a motor 403, an inertial sensor (IMU) 404, and a motor position detector 405.

For the motor (motor) 403, essence of optical image stabilization is as follows: The motor driver 402 drives the motor 403, so that the motor 403 can push the image sensor 401 or the lens to undergo target displacement, to offset shake displacement of a human hand, thereby implementing optical image stabilization. That is, it is a method for correcting shake through relative displacement of the image sensor (Sensor) 401. In the optical image stabilization apparatus provided in this embodiment of this application, the motor 403 is a component that enables the lens or the image sensor 401 to be displaced, and may be specifically an electric motor or an engine. For example, an operating principle of the motor 403 may be that an energized coil is stressed to rotate in a magnetic field to drive a starter rotor to rotate, and a pinion on the rotor drives a flywheel of the engine to rotate. In a possible implementation, the optical image stabilization apparatus further includes the motor, and the motor driver is further configured to drive the motor in the target driving state to push the image sensor or the lens to undergo target displacement. Optionally, the motor 403 is a motor inside the camera module. For example, the motor 403 may be a voice coil motor (Voice Coil Motor, VCM). A main principle of the voice coil motor is to control a stretching position of a spring plate by changing a direct current of a coil in the motor in a permanent magnetic field, to drive the spring plate to move up and down. Alternatively, the motor 403 may be a shape memory alloy (Shape Memory Alloy, SMA) motor. A main principle of the shape memory alloy motor is to drive a related component to move by using a resultant force generated when a plurality of SMA wires are energized and shrink. Alternatively, the motor 403 may be a piezoelectric motor. A principle of the piezoelectric motor is that a piezoelectric ceramic generates movement phenomenon such as contraction and extension under an alternating electric field, and when a specific type of vibration and ultrasonic wave is excited in an elastic body, a surface of the elastic body drives, by using friction, an object in contact with the surface of the elastic body to move. It may be understood that the motor in embodiments of this application may be of another type, and is not enumerated herein. Setting a driving frequency is setting a displacement frequency of the motor. For example, displacement is set once every 10 ms, and a displacement frequency of the motor is 100 Hz in 1 ms.

The inertia sensor (IMU) 404 may be a detection apparatus for measuring a triaxial angular velocity and acceleration of an object. For example, the inertia sensor 404 may include: an accelerometer, configured to detect acceleration signals of three independent axes of a coordinate system of a carrier; a gyroscope, configured to detect an angular velocity signal of the carrier relative to a navigation coordinate system; and a magnetometer, configured to provide pitch, roll, and yaw angles that have an absolute reference for a user by using a Kalman filtering algorithm, a complementary filtering algorithm, or another algorithm. In this embodiment of this application, the IMU may sense a shake direction of the optical image stabilization apparatus and shake displacement (namely, shake information of a human hand), to determine a specific push direction and specific push displacement of the motor. Further, the inertia sensor 404 may obtain the shake information of the human hand, and obtain, through calculation by using an algorithm, displacement required for offsetting image stabilization, so that the motor driver 402 may control the motor 403 to push the image sensor 401 or the lens to undergo relative displacement, to complete image stabilization.

The motor position detector 405 is a built-in motor position detector in the optical image stabilization apparatus 40 (for example, a mobile phone), so that displacement of the motor can be corrected, that is, a displacement error of the motor in an image stabilization process is corrected, to accurately obtain the image stabilization displacement of the motor. Optionally, the motor is a position detector inside the camera module.

Further, refer to FIG. 4D. FIG. 4D is a diagram of a hardware structure of another optical image stabilization apparatus according to an embodiment of this application. The optical image stabilization apparatus may further include one or more of a processor 400, a lens 406, a power management unit (Power Management Unit, PMU) 407, and a battery 408.

The processor 400 may include one or more processing units. For example, the processor 400 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The lens 406 may belong to the camera module, and an object generates an optical image through the lens 406 and projects the optical image onto the image sensor 401. In addition, the motor driver 402 may drive the motor 403, so that the motor 403 may push the image sensor 401 or the lens 406 to undergo target displacement, to offset shake displacement of a human hand, thereby implementing optical image stabilization.

The power management unit (PMU) 407 may include a power management function and a charging management function, that is, integrate a power management function and a charging management function. The power management unit 407 may be configured to connect to the battery 408, the processor 400, and the motor driver 402. The power management unit 407 receives an input of the battery 408 to supply power to the processor 400, the motor driver 402, the image sensor 401, and the like. In the optical image stabilization apparatus in this embodiment of this application, a large current is required in a process of pushing the lens 406 or the image sensor 401, and an average current flowing through the motor 403 in a period of time determines a position of the motor. Therefore, the power management unit 407 may be configured to provide the current, and the motor driver 402 may be configured to control current intensity, a manner, and a driving frequency. For example, the power management unit 407 may be further configured to monitor parameters such as a battery capacity, a battery cycle count, and a battery health status (electric leakage or impedance). In some other embodiments, the power management unit 407 may alternatively be disposed in the processor 400.

This embodiment of this application provides the optical image stabilization apparatus, where a structure of an optical apparatus and a driving adjustment policy are mainly designed. The structure includes the motor driver and the image sensor that are physically connected. The image sensor directly reports different states such as the exposure state, the readout state, or the interframe idle state of the image sensor in an operating period to the motor driver through physical connection. The motor driver may adjust the driving state of the motor driver based on different operating statuses of the image sensor. The driving state specifically includes different driving manners and different driving frequencies, to better adjust a motor, greatly reduce power consumption while ensuring imaging quality, and improve motor performance. In conclusion, this embodiment of this application provides a new low-power management solution for the motor driver. In the solution, the image sensor (Sensor) component is associated with the motor driver (Driver). The motor driver accurately obtains the operating status of the image sensor, and accurately controls the driving manner and the driving frequency of the motor based on different operating statuses of the image sensor, to reduce power consumption while ensuring image shooting quality.

It may be understood that the structures illustrated in the foregoing embodiments of this application do not constitute a specific limitation on the optical image stabilization apparatus 40. In some other embodiments of this application, the optical image stabilization apparatus 40 may include more or fewer components than those shown in the figure, or combine some components, or split some components, or have different component arrangements. The components shown in figure may be implemented by hardware, software, or a combination of software and hardware.

FIG. 5A is a diagram of an operating range of an image sensor according to an embodiment of this application. Specifically, the operating range of the image sensor (Sensor) is divided into an exposure (exposure) area, a readout (ReadOut) area, and an interframe idle area. The exposure (exposure) area and the readout (ReadOut) area may overlap in time. In this embodiment of this application, when obtaining an operating status of the image sensor (Sensor) from the image sensor, a driver (Driver) can accurately control a driving manner and a driving frequency of a motor. Based on the operating range of the image sensor shown in FIG. 5A, the operating status of the image sensor may be divided into the following four states: only an exposure state, both an exposure state and a readout state, only a readout state, and an interframe idle state. The following illustrates four driving solutions of the motor driver in embodiments of this application based on the foregoing four states of the image sensor.
(1) Driving solution 1: The image sensor is only in the exposure state.

When a current operating status of the image sensor is the exposure state, the motor driver needs to adjust a driving state of the motor driver to a target state. The target driving state includes a PWM driving manner and a first driving frequency in a high-speed state.

When the image sensor is in an exposure time period in an imaging phase, the image sensor has a high requirement on optical image stabilization, but is insensitive to electromagnetic radiation. Specifically, the image sensor is sensitive to shake of a human hand in an exposure phase. In this case, maintaining a driving frequency in the high-speed state helps improve imaging quality. In addition, the motor driver generates different degrees of power consumption and causes different electromagnetic radiation interference in different driving manners. For example, when the driving manner of the motor driver is the pulse width modulation PWM driving manner, because a current output by the motor driver is a periodic square wave, the current output by the motor driver has a specific frequency, and therefore, electromagnetic radiation is generated, which interferes with the image sensor (which may cause a decrease in image quality). However, in this manner, power consumption can be greatly reduced. In addition, because electromagnetic radiation affects a readout circuit of the image sensor (in other words, an image sensor in a phase in which the readout state is not included is not affected by electromagnetic radiation), the image sensor that is only in the exposure state is insensitive to electromagnetic radiation, and is suitable for using the PWM driving manner. Therefore, in this embodiment of this application, when the operating status of the image sensor is the exposure state in the imaging phase, the driving manner of the motor driver may be adjusted to the pulse width modulation (PWM) driving manner (to reduce power consumption while meeting low electromagnetic radiation sensitivity) and the high-frequency state (to meet a high image stabilization requirement), to ensure both high imaging quality and low power consumption.

In a possible implementation, the image sensor is specifically configured to report the exposure state to the motor driver at a moment t2 before an exposure start moment T2 of the image sensor. The motor driver is specifically configured to complete switching from the driving state to the target driving state before the exposure moment T2 after receiving the exposure state reported by the image sensor at the moment t2.

For example, refer to FIG. 5B. FIG. 5B is a diagram of status notification and switching moments of an image sensor according to an embodiment of this application. When obtaining an operating status of a sensor from an I/O interface of a driver (Driver), the driver determines whether to switch from linear driving to PWM driving, or from PWM driving to dynamic linear driving, and also determines whether to switch a frequency of driving a motor from a high speed to a low speed, or from a low speed to a high speed. Regardless of whether the driving manner is switched or the driving frequency is switched, the driver (Driver) needs a specific time. The sensor is sensitive to electromagnetic radiation at a readout moment. If switching starts from a moment at which an actual readout moment is received, the sensor is further interfered with by electromagnetic radiation within a switching time. The sensor is sensitive to shake of a human hand in an exposure phase. In this case, it is expected that the driving frequency remains in a high-speed state. If switching from a low speed to a high speed starts from an actual exposure moment, image stabilization effect is affected within the switching time. To minimize electromagnetic radiation during driving manner switching, and ensure optical image stabilization performance during driving frequency switching, the sensor may output status information in advance of an actual status change moment of the sensor. Because switching times of different drivers are inconsistent, the lead time may be configured externally.

In this embodiment of this application, the image sensor may report the operating status of the image sensor to the motor driver in advance through status output control, so that the motor driver can prepare for switching of the driving manner and the driving frequency in advance. A reason is that it takes a specific time to switch from one driving state to another driving state. In this way, the motor driver can complete switching of the driving manner when the image sensor actually enters a corresponding operating status, so that the driving state of the motor driver matches the operating status of the image sensor more accurately, to better implement high imaging quality and low power consumption.

(2) Driving solution 2: The image sensor is in both the exposure state and the readout state.

When a current operating status of the image sensor is both the exposure state and the readout state, the motor driver needs to adjust a driving state of the motor driver to a target state. The target driving state includes a dynamic linear driving manner and a first driving frequency in a high-speed state.

When the image sensor is in an exposure time period and a readout time period in an imaging phase, the image sensor has a high requirement on optical image stabilization, and is sensitive to electromagnetic radiation. Specifically, the image sensor is sensitive to shake of a human hand in exposure and readout phases. In this case, maintaining a driving frequency in the high-speed state helps improve imaging quality. In addition, the motor driver generates different degrees of power consumption and causes different electromagnetic radiation interference in different driving manners. For example, when the driving manner of the motor driver is the dynamic linear driving manner, current intensity supplied to the motor is always the same as average current intensity of the motor for maintaining displacement of the motor. After optical image stabilization is enabled, a MOS transistor or a triode inside the motor driver always remains in an on state, a voltage of a power management unit end of a power supply always remains constant, and power consumption on Ron is (Vin-VO)*I. In this manner, there is no electromagnetic radiation interference to a peripheral component, and power consumption is lower than that of linear driving. Because electromagnetic radiation affects a readout circuit of the image sensor (in other words, an image sensor in a phase in which the readout state is included is affected by electromagnetic radiation), the image sensor that is in both the exposure time period and the readout time period is sensitive to electromagnetic radiation, and is not suitable for using the PWM driving manner. In addition, because power consumption in the linear driving manner is high, the image sensor is suitable for using the dynamic linear driving manner. Therefore, in this embodiment of this application, when the operating status of the image sensor is both the exposure state and the readout state in the imaging phase, the driving manner of the motor driver may be adjusted to the dynamic linear driving manner (to reduce power consumption while meeting high electromagnetic radiation sensitivity) and the high-frequency state (to meet a high image stabilization requirement), to improve imaging quality.

(3) Driving solution 3: The image sensor is only in the readout state.

When a current operating status of the image sensor is the readout state, the motor driver needs to adjust a driving state of the motor driver to a target state. The target driving state includes a dynamic linear driving manner and a second driving frequency in a low-speed state.

When the image sensor is only in a readout time period, the image sensor has a low requirement on optical image stabilization, but is sensitive to electromagnetic radiation. Specifically, the image sensor has the low requirement on optical image stabilization in a readout phase. In this case, maintaining a driving frequency in the low-speed state helps reduce power consumption. In addition, the motor driver generates different degrees of power consumption and causes different electromagnetic radiation interference in different driving manners. For example, when the driving manner of the motor driver is the dynamic linear driving manner, current intensity supplied to the motor is always the same as average current intensity of the motor for maintaining displacement of the motor. After optical image stabilization is enabled, a MOS transistor or a triode inside the motor driver always remains in an on state, a voltage of a power management unit end of a power supply always remains constant, and power consumption on Ron is (Vin-VO)*I. In this manner, there is no electromagnetic radiation interference to a peripheral component, and power consumption is lower than that of linear driving. Because electromagnetic radiation affects a readout circuit of the image sensor (in other words, an image sensor in a phase that includes a readout state is affected by electromagnetic radiation), the image sensor that is in both the exposure time period and the readout time period is sensitive to electromagnetic radiation, and is not suitable for using the PWM driving manner. In addition, because power consumption in the linear driving manner is high, the image sensor is suitable for using the dynamic linear driving manner. Therefore, in this embodiment of this application, when the operating status of the image sensor is only in the readout state, the driving manner of the motor driver may be adjusted to the dynamic linear driving manner (to reduce power consumption while meeting high electromagnetic radiation sensitivity) and the low-speed frequency state (to reduce power consumption while meeting a low image stabilization requirement), to ensure both high imaging quality and low power consumption. In addition, it may be understood that in this embodiment of this application, the first driving frequency is greater than the second driving frequency.

In a possible implementation, the image sensor is specifically configured to report the readout state to the motor driver at a moment t1 before a readout start moment T1 of the image sensor. The motor driver is specifically configured to complete switching from the driving state to the target driving state before the readout moment T1 after receiving the readout state reported by the image sensor at the moment t1. In this embodiment of this application, the image sensor may report the operating status of the image sensor to the motor driver in advance through status output control, so that the motor driver can prepare for switching of the driving manner and the driving frequency in advance. A reason is that it takes a specific time to switch from one driving state to another driving state. In this way, the motor driver can complete switching of the driving manner when the image sensor actually enters a corresponding operating status, so that the driving state of the motor driver matches the operating status of the image sensor more accurately, to better implement high imaging quality and low power consumption.

(4) Drive solution 4: The image sensor is in the interframe idle state.

When a current operating status of the image sensor is the interframe idle state, the motor driver needs to adjust a driving state of the motor driver to a target state. The target driving state includes a PWM driving manner and a second driving frequency in a low-speed state.

When the image sensor is in an interframe idle phase, the image sensor has a low requirement on optical image stabilization, and is also insensitive to electromagnetic radiation. Specifically, the image sensor has the low requirement on optical image stabilization in a readout phase. In this case, maintaining a driving frequency in the low-speed state helps reduce power consumption. In addition, the motor driver generates different degrees of power consumption and causes different electromagnetic radiation interference in different driving manners. For example, when the driving manner of the motor driver is the pulse width modulation PWM driving manner, because a current output by the motor driver is a periodic square wave, the current output by the motor driver has a specific frequency, and therefore, electromagnetic radiation is generated, which interferes with the image sensor (which may cause a decrease in image quality). However, in this manner, power consumption can be greatly reduced. In addition, because electromagnetic radiation affects a readout circuit of the image sensor (in other words, an image sensor in a phase in which the readout state is not included is not affected by electromagnetic radiation), the image sensor that is in the interframe idle state is insensitive to electromagnetic radiation, and is suitable for using the PWM driving manner. Therefore, in this embodiment of this application, when the operating status of the image sensor is in the interframe idle phase (namely, an interframe interval phase), the driving manner of the motor driver may be adjusted to the PWM driving manner (to reduce power consumption while meeting low electromagnetic radiation sensitivity) and the low-speed frequency state (to reduce power consumption while meeting a low image stabilization requirement), to ensure both high imaging quality and low power consumption.

Based on the structures of the optical image stabilization apparatus 40 provided in the foregoing embodiments of this application, the following uses an example to describe a specific implementation in which the motor driver in the apparatus 40 adjusts the driving state based on the operating status fed back by the image sensor.

Refer to FIG. 5C. FIG. 5C is a diagram of an operating range of a motor driver according to an embodiment of this application. After obtaining an actual operating status of an image sensor (Sensor), a motor driver (Driver) determines a driving manner and a driving frequency of a motor based on different operating statuses. In FIG. 5C, the operating range of the image sensor (Sensor) is divided into an exposure (exposure) area, a readout (ReadOut) area, and an interframe idle area. The exposure (exposure) area and the readout (ReadOut) area may overlap in time. Optical image stabilization (OIS) sensitive indicates that an optical image stabilization requirement is high, and OIS insensitive indicates that an optical image stabilization requirement is low. Sensor insensitive indicates that a sensor is insensitive to electromagnetic radiation. Sensor sensitive indicates that a sensor is sensitive to electromagnetic radiation. Vertical block (Vertical Block, VB) indicates a frame interval. Motor image stabilization indicates that a motor is in a high-speed state and a driving frequency of a corresponding motor driver is in a high-speed state. Motor follow-up indicates that a motor is in a low-speed state and a driving frequency of a corresponding motor driver is in a high-speed state. PWM indicates pulse width modulation driving. Linear indicates dynamic linear driving. A readout frame in the readout (ReadOut) area corresponds to a dynamic linear driving manner between a start of frame (Start of frame, SOF) and an end of frame (End of frame, EOF), and another operating range corresponds to a pulse width modulation driving manner.
(1) The image sensor (Sensor) is only in an exposure (Exposure) time period. In this case, the sensor is in an imaging phase. The image sensor has a high requirement on optical image stabilization (which is OIS sensitive), but is insensitive to electromagnetic radiation (which is Sensor insensitive). In this case, the motor may be driven in the pulse width modulation (PWM) manner. To improve imaging quality, the motor needs an image stabilization function to be enabled, in other words, the motor is in a high-speed state. Correspondingly, the driving frequency of the motor needs to be in a high-speed state.
(2) The image sensor (Sensor) is in both an exposure (Exposure) time period and a readout (ReadOut) time period. In this case, the image sensor is in an imaging phase. The image sensor has a high requirement on optical image stabilization (OIS), which is OIS sensitive, and is also in an electromagnetic radiation sensitive phase (which is Sensor sensitive). In this case, the motor is driven in the dynamic linear driving manner. To improve imaging quality, the motor needs an image stabilization function to be enabled, in other words, the motor is in a high-speed state. Correspondingly, the driving frequency of the motor needs to be in a high-speed state.
(3) The image sensor (Sensor) is only in a readout time period. In this case, the image sensor is not in an imaging phase. The image sensor has a low requirement on optical image stabilization (which is OIS insensitive), but is sensitive to electromagnetic radiation (which is Sensor sensitive). In this case, the motor is driven in the dynamic linear voltage regulation manner. To reduce power consumption, the motor only needs a follow-up function to be enabled, in other words, the motor may be in a low-speed state. Correspondingly, the driving frequency of the motor is in a low-speed state.
(4) The image sensor (Sensor) is neither in an Exposure time period nor in a readout time period, which is a Sensor interframe idle area. In this case, the image sensor is insensitive to electromagnetic radiation (which is Sensor insensitive), and is not in an imaging phase (which is OIS insensitive). In this case, the motor may be driven in the PWM manner. The motor only needs a follow-up function to be enabled, in other words, the motor may be in a low-speed state. Correspondingly, the driving frequency of the motor is in a low-speed state.

In this embodiment of this application, to further reduce power consumption, a conventional PWM and linear voltage regulation switching solution is no longer used, but a PWM and dynamic linear voltage regulation switching solution is used. To further reduce power consumption, the motor driver enters a low-speed state and enters a follow-up state from an actual readout moment, and does not enter an IDLE state at the beginning of an idle moment.

Refer to FIG. 5D. FIG. 5D is a diagram of joint operation of an image sensor and a motor driver according to an embodiment of this application. The following uses an example to describe a specific implementation in which the motor driver in the apparatus 40 adjusts the driving state based on the operating status fed back by the image sensor.
1. Determine a time t1 for switching from PWM to dynamic linear driving of the motor driver, and a time t2 for switching from dynamic linear driving to PWM.
2.t1 and t2 may be configured in the image sensor (Sensor) as lead times.
3. During photographing, the image sensor (Sensor) notifies the motor driver in advance that the image sensor enters an exposure state and a readout state, and the lead times are t2 and t1, respectively.
4. The image sensor (Sensor) outputs the exposure state t2 in advance before an actual exposure start moment of the image sensor. After receiving the state, the motor driver adjusts a driving frequency from a low speed to a high speed. It is ensured that a switching end moment is synchronous with an actual exposure moment or is earlier than the actual exposure moment. After receiving an exposure end state, the motor driver enters a low-speed mode from a high-speed mode.
5. The image sensor (Sensor) outputs the readout state t1 in advance before an actual readout start moment of the image sensor. After receiving the state, the drive component adjusts a driving manner from PWM to dynamic linear driving. It is ensured that a switching end moment is synchronous with an actual readout moment or is earlier than the actual readout moment. This prevents electromagnetic radiation from persisting after the actual readout moment. After receiving a readout end state, the drive component enters a PWM driving manner from a dynamic linear driving manner.

In this embodiment of this application, compared with the conventional technology, to reduce power consumption in a readout phase, the linear driving manner is switched to the dynamic linear driving manner.

Refer to FIG. 6. FIG. 6 is a schematic flowchart of an optical image stabilization method according to an embodiment of this application. The method may be applied to the optical image stabilization apparatus in FIG. 4A, FIG. 4B, or FIG. 4C. The optical image stabilization apparatus includes a motor driver and an image sensor physically connected to the motor driver. The optical image stabilization method may include method procedure steps S601 and S602.

Step S601: Report an operating status of the image sensor to the motor driver by the image sensor, where the operating status includes one or more of an exposure state, a readout state, and an interframe idle state.

Step S602: Monitor the operating status of the image sensor by the motor driver, and adjust a driving state of the motor driver to a target driving state based on the operating status, where the driving state includes a driving manner and a driving frequency.

In a possible implementation, the driving manner includes one or more of a linear driving manner, a pulse width modulation PWM driving manner, and a dynamic linear driving manner.

In a possible implementation, the optical image stabilization apparatus further includes a motor; and the method further includes:
driving, by the motor driver, the motor in the target driving state to push the image sensor or a lens to undergo target displacement.

In a possible implementation, when the operating status is the exposure state, the target driving state includes the PWM driving manner and a first driving frequency in a high-speed state.

In a possible implementation, when the operating status is both the exposure state and the readout state, the target driving state includes the dynamic linear driving manner and a first driving frequency in a high-speed state.

In a possible implementation, when the operating status is the readout state, the target driving state includes the dynamic linear driving manner and a second driving frequency in a low-speed state.

In a possible implementation, when the operating status is the interframe idle state, the target driving state includes the PWM driving manner and a second driving frequency in a low-speed state.

In a possible implementation, reporting the operating status of the image sensor to the motor driver by the image sensor includes: reporting the exposure state to the motor driver at a moment t2 before an exposure start moment T2 of the image sensor; and
monitoring the operating status of the image sensor by the motor driver, and adjusting the driving state of the motor driver to the target driving state based on the operating status includes: completing, by the motor driver, switching from the driving state to the target driving state before the exposure moment T2 after receiving the exposure state reported by the image sensor at the moment t2.

In a possible implementation, reporting the operating status of the image sensor to the motor driver by the image sensor includes: reporting the readout state to the motor driver at a moment t1 before a readout start moment T1 of the image sensor; and
monitoring the operating status of the image sensor by the motor driver, and adjusting the driving state of the motor driver to the target driving state based on the operating status includes: completing, by the motor driver, switching from the driving state to the target driving state before the readout moment T1 after receiving the readout state reported by the image sensor at the moment t1.

In a possible implementation, the image sensor is connected to the motor driver through an input/output I/O interface; and reporting the operating status of the image sensor to the motor driver by the image sensor includes:
reporting, by the image sensor, the operating status of the image sensor to the motor driver through the I/O interface.

It should be noted that for a procedure of each step of the optical image stabilization method described in embodiments of this application, refer to related descriptions in the apparatus embodiments in FIG. 3A-1 to FIG. 5D. Details are not described herein again.

An embodiment of this application further provides a system on a chip SoC. The SoC may include a motor driver and an I/O interface. The motor driver is connected to an image sensor through the I/O interface.

The I/O interface is configured for the image sensor to report an operating status of the image sensor to the motor driver, where the operating status includes one or more of an exposure state, a readout state, and an interframe idle state.

The motor driver is configured to: monitor the operating status of the image sensor through the I/O interface, and adjust a driving state of the motor driver to a target driving state based on the operating status, where the driving state includes a driving manner and a driving frequency.

In a possible implementation, a specific type of a communication interface between the motor driver and the image sensor is not specifically limited in this embodiment of this application, and the motor driver and the image sensor may be connected and communicate with each other through different communication interfaces based on different application scenarios or transmission requirements. For example, the motor driver may also query a register by using an interface protocol to obtain an operating status value of the image sensor.

In a possible implementation, the driving manner includes one or more of a linear driving manner, a pulse width modulation PWM driving manner, and a dynamic linear driving manner.

In a possible implementation, the motor driver is further connected to a motor, and the motor driver is further configured to drive the motor in the target driving state to push the image sensor or a lens to undergo target displacement.

In a possible implementation, when the operating status is the exposure state, the target driving state includes the PWM driving manner and a first driving frequency in a high-speed state.

In a possible implementation, when the operating status is both the exposure state and the readout state, the target driving state includes the dynamic linear driving manner and a first driving frequency in a high-speed state.

In a possible implementation, when the operating status is the readout state, the target driving state includes the dynamic linear driving manner and a second driving frequency in a low-speed state.

In a possible implementation, when the operating status is the interframe idle state, the target driving state includes the PWM driving manner and a second driving frequency in a low-speed state.

In a possible implementation, the I/O interface is specifically configured to: report, by the image sensor, the exposure state to the motor driver at a moment t2 before an exposure start moment T2 of the image sensor; and the motor driver is specifically configured to complete switching from the driving state to the target driving state before the exposure moment T2 after receiving the exposure state reported by the image sensor at the moment t2 through the I/O interface.

In a possible implementation, the I/O interface is specifically configured to: report, by the image sensor, the readout state to the motor driver at a moment tl before a readout start moment T1 of the image sensor; and the motor driver is specifically configured to complete switching from the driving state to the target driving state before the readout moment T1 after receiving the readout state reported by the image sensor at the moment t1 through the I/O interface.

It should be noted that, for functions of the SoC in this embodiment of this application, refer to the related descriptions of the apparatus embodiments in FIG. 3A-1 to FIG. 5D. Details are not described herein again.

An embodiment of this application further provides a computer storage medium. The computer storage medium may store a program. When the program is executed, a part or all of the steps of any one of the foregoing described method embodiments are performed.

An embodiment of this application further provides a computer program. The computer program includes instructions. When the computer program is executed by a computer, the computer is enabled to perform a part or all of the steps of any one of the foregoing described method embodiments.

In the foregoing embodiments, the descriptions of each embodiment have respective focuses. For a part that is not described in detail in an embodiment, refer to the related descriptions in other embodiments.

It should be noted that, for ease of description, the foregoing method embodiments are represented as a series of action combinations. However, persons skilled in the art should appreciate that this application is not limited to the described action order, because some steps may be performed in another order or simultaneously according to this application. It should be further appreciated by persons skilled in the art that embodiments described in this specification all belong to example embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device, and may specifically be a processor in a computer device) to perform all or some of the steps of the foregoing methods described in the embodiments of this application. The foregoing storage medium includes any medium that can store program code, such as a USB flash drive, a removable hard disk, a magnetic disk, an optical disc, a read-only memory (Read-Only Memory, ROM for short), or a random access memory (Random Access Memory, RAM for short).

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. An optical image stabilization apparatus, comprising a motor driver and an image sensor physically connected to the motor driver, wherein
the image sensor is configured to report an operating status of the image sensor to the motor driver, wherein the operating status comprises one or more of an exposure state, a readout state, and an interframe idle state; and
the motor driver is configured to: monitor the operating status of the image sensor, and adjust a driving state of the motor driver to a target driving state based on the operating status, wherein the driving state comprises a driving manner and a driving frequency.

2. The apparatus according to claim 1, wherein the driving manner comprises one or more of a linear driving manner, a pulse width modulation PWM driving manner, and a dynamic linear driving manner.

3. The apparatus according to claim 1 or 2, wherein the optical image stabilization apparatus further comprises a motor, and the motor driver is further configured to drive the motor in the target driving state to push the image sensor or a lens to undergo target displacement.

4. The apparatus according to any one of claims 1 to 3, wherein when the operating status is the exposure state, the target driving state comprises the PWM driving manner and a first driving frequency in a high-speed state.

5. The apparatus according to any one of claims 1 to 3, wherein when the operating status is both the exposure state and the readout state, the target driving state comprises the dynamic linear driving manner and a first driving frequency in a high-speed state.

6. The apparatus according to any one of claims 1 to 3, wherein when the operating status is the readout state, the target driving state comprises the dynamic linear driving manner and a second driving frequency in a low-speed state.

7. The apparatus according to any one of claims 1 to 3, wherein when the operating status is the interframe idle state, the target driving state comprises the PWM driving manner and a second driving frequency in a low-speed state.

8. The apparatus according to any one of claims 1 to 5, wherein the image sensor is specifically configured to:
report the exposure state to the motor driver at a moment t2 before an exposure start moment T2 of the image sensor; and
the motor driver is specifically configured to complete switching from the driving state to the target driving state before the exposure moment T2 after receiving the exposure state reported by the image sensor at the moment t2.

9. The apparatus according to any one of claims 1 to 3, 5, and 6, wherein the image sensor is specifically configured to:
report the readout state to the motor driver at a moment t1 before a readout start moment T1 of the image sensor; and
the motor driver is specifically configured to complete switching from the driving state to the target driving state before the readout moment T1 after receiving the readout state reported by the image sensor at the moment t1.

10. The apparatus according to any one of claims 1 to 9, wherein the image sensor is connected to the motor driver through an input/output I/O interface; and
the image sensor is specifically configured to report the operating status of the image sensor to the motor driver through the I/O interface.

11. An optical image stabilization method, applied to an optical image stabilization apparatus, wherein the optical image stabilization apparatus comprises a motor driver and an image sensor physically connected to the motor driver; and the method comprises:
reporting an operating status of the image sensor to the motor driver by the image sensor, wherein the operating status comprises one or more of an exposure state, a readout state, and an interframe idle state; and
monitoring the operating status of the image sensor by the motor driver, and adjusting a driving state of the motor driver to a target driving state based on the operating status, wherein the driving state comprises a driving manner and a driving frequency.

12. The method according to claim 11, wherein the driving manner comprises one or more of a linear driving manner, a pulse width modulation PWM driving manner, and a dynamic linear driving manner.

13. The method according to claim 11, wherein the optical image stabilization apparatus further comprises a motor; and the method further comprises:
driving, by the motor driver, the motor in the target driving state to push the image sensor or a lens to undergo target displacement.

14. The method according to any one of claims 11 to 13, wherein when the operating status is the exposure state, the target driving state comprises the PWM driving manner and a first driving frequency in a high-speed state.

15. The method according to any one of claims 11 to 14, wherein when the operating status is both the exposure state and the readout state, the target driving state comprises the dynamic linear driving manner and a first driving frequency in a high-speed state.

16. The method according to any one of claims 11 to 14, wherein when the operating status is the readout state, the target driving state comprises the dynamic linear driving manner and a second driving frequency in a low-speed state.

17. The method according to any one of claims 11 to 14, wherein when the operating status is the interframe idle state, the target driving state comprises the PWM driving manner and a second driving frequency in a low-speed state.

18. The method according to any one of claims 11 to 15, wherein reporting the operating status of the image sensor to the motor driver by the image sensor comprises: reporting the exposure state to the motor driver at a moment t2 before an exposure start moment T2 of the image sensor; and
monitoring the operating status of the image sensor by the motor driver, and adjusting the driving state of the motor driver to the target driving state based on the operating status comprises: completing, by the motor driver, switching from the driving state to the target driving state before the exposure moment T2 after receiving the exposure state reported by the image sensor at the moment t2.

19. The method according to any one of claims 11 to 13, 15, and 16, wherein reporting the operating status of the image sensor to the motor driver by the image sensor comprises: reporting the readout state to the motor driver at a moment t1 before a readout start moment T1 of the image sensor; and
monitoring the operating status of the image sensor by the motor driver, and adjusting the driving state of the motor driver to the target driving state based on the operating status comprises: completing, by the motor driver, switching from the driving state to the target driving state before the readout moment T1 after receiving the readout state reported by the image sensor at the moment t1.

20. The method according to any one of claims 11 to 19, wherein the image sensor is connected to the motor driver through an input/output I/O interface; and reporting the operating status of the image sensor to the motor driver by the image sensor comprises:
reporting, by the image sensor, the operating status of the image sensor to the motor driver through the I/O interface.

21. A camera device, comprising the optical image stabilization apparatus according to any one of claims 1 to 10, the motor, an inertial measurement unit IMU, and a motor position detector, wherein
the IMU is configured to detect shake information of the apparatus;
the motor driver is configured to drive, based on the shake information, the motor to undergo image stabilization displacement; and
the motor position detector is configured to correct the image stabilization displacement of the motor.

22. An electronic device, comprising the optical image stabilization apparatus according to any one of claims 1 to 10 and a processor, wherein the processor is configured to send an image shooting instruction to the image sensor in the optical image stabilization apparatus; and
the image sensor is configured to enter a corresponding operating status according to the received image shooting instruction, wherein the operating status comprises one or more of the exposure state, the readout state, and the interframe idle state.

23. The electronic device according to claim 22, further comprising:
a memory, configured to store program instructions, wherein the program instructions are executed by the processor.

24. An electronic device, comprising a processor and a memory, wherein
the memory is configured to store program code, and the processor is configured to invoke the program code stored in the memory to perform the following steps:
reporting an operating status of the image sensor to the motor driver by the image sensor, wherein the operating status comprises one or more of an exposure state, a readout state, and an interframe idle state; and
monitoring the operating status of the image sensor by the motor driver, and adjusting a driving state of the motor driver to a target driving state based on the operating status, wherein the driving state comprises a driving manner and a driving frequency.

25. A system on a chip SoC, comprising a motor driver and an I/O interface, wherein the motor driver is connected to an image sensor through the I/O interface;
the I/O interface is configured for the image sensor to report an operating status of the image sensor to the motor driver, wherein the operating status comprises one or more of an exposure state, a readout state, and an interframe idle state; and
the motor driver is configured to: monitor the operating status of the image sensor through the I/O interface, and adjust a driving state of the motor driver to a target driving state based on the operating status, wherein the driving state comprises a driving manner and a driving frequency.

26. A computer-readable storage medium, wherein the computer-readable medium is configured to store program code, and when the program code is executed by a processor, the method according to any one of claims 11 to 20 is implemented.

27. A computer program, wherein the computer program comprises instructions, and when the instructions are executed by a processor, the processor is enabled to perform the method according to any one of claims 11 to 20.
